(19) Europäisches Patentamt
European Patent Office
Office européen des brevets

(11) **EP 2 290 773 B1**

(12) **EUROPEAN PATENT SPECIFICATION**

(45) Date of publication and mention
of the grant of the patent:
**28.01.2015 Bulletin 2015/05**

(51) Int Cl.:
***H02H 1/00*** *(2006.01)*     ***H02H 3/16*** *(2006.01)*
***H02H 3/33*** *(2006.01)*

(21) Application number: **10173348.3**

(22) Date of filing: **19.08.2010**

(54) **Differential current transformer and residual current operated protective device**

Differenzstromwandler und Differenzstromschutzgerät

Transformateur à courant résiduel et appareil de protection différentielle

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **31.08.2009 CN 200910171625**

(43) Date of publication of application:
**02.03.2011 Bulletin 2011/09**

(73) Proprietor: **Siemens Aktiengesellschaft
80333 München (DE)**

(72) Inventors:
• **Yang, Xin Yi
200092, Shanghai (CN)**
• **Min, Ying Zong
200129, Shanghai (CN)**
• **Xu, Ze Liang
200135, Shanghai (CN)**
• **Zhuo, Yue
100084, Beijing (CN)**

(56) References cited:
**EP-A1- 0 936 716**     **WO-A1-86/06889**
**US-A1- 2004 037 018**     **US-A1- 2004 100 742**

**Description**

Technical field

The present invention relates to the field of electric current leakage protection technology and, particularly, to a residual current operated protective device (RCD) and a differential current transformer (DCT) in the residual current operated protective device RCD.

Background art

A residual current operated protective device RCD is a current operated electric leakage protective device, and the differential current transformer DCT is an important component in the RCD, which is used to detect whether there is any residual current (that is the leakage current) in an electric power circuit. The structure of a DCT is similar to that of a transformer, comprising an iron core and two mutually insulated coils wound on the iron core, so that when there is a residual current in the primary coil side, the secondary coil will then have an induced current. Furthermore, a DCT can also include a shielded housing and a bracket. In a practical application, the primary coil is connected with the power line to be detected or an electric power circuit (such as a phase line and a zero line) to be detected passes though the iron core directly as the primary coil, and the secondary coil is connected to a switch device in the RCD. When the electric equipment runs normally (that is to say, there is no leakage current to earth), the current in the circuit is in a balanced state, the vector sum of the DCT currents is zero, there is no magnetic flux change in the iron core, and therefore there will be no induced current in the secondary coil, with the switching device of the RCD being in the turn-on state. When there is a leakage current to earth in the electrical equipment, the vector sum of the currents is not zero, there is magnetic flux changes in the iron core, and it will induce a current in the secondary coil, and when this current value reaches a threshold limit of the RCD, the power will be turned off by the switching device.

Linearity and sensitivity are two important performance criteria of the DCT, which determine the stability and reliability of the RCD.

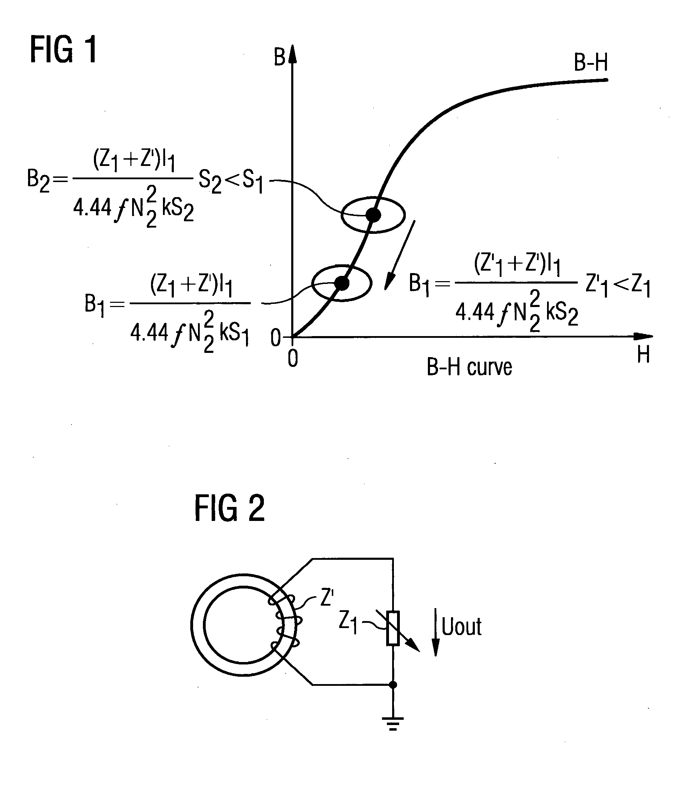

The linearity of a DCT is determined by the working position of the iron core in the B-H curve shown in Fig. 1 (the horizontal axis is the magnetic field strength H, and vertical axis is the magnetic flux density B), in which, B can be calculated by equation (1).

$$B = \frac{(Z_1 + Z^{'})I_1}{4.44 f N_2^2 kS}$$

(1)

In the above equation, $Z_1$ is the load resistance, $Z'$ is the secondary coil resistance, $I_1$ is the primary current, $f$ is the signal frequency, $N_2$ is the number of turns of the secondary coil, $k$ is the lamination coefficient of the iron core, and $S$ is the cross-sectional area of the iron core.

When the working position of the iron core is located in a rational area, DCT has a very good linearity performance. Since the DCTs in the prior art already have very mature technologies, the working position of the iron core of a DCT will be considered as a rational position which has quite good linearity, that is the position corresponds to $B_1$ in Fig. 1, and $S_1$ in the equation $B_1$ is the cross-sectional area of the iron core of the DCT in the prior art.

The sensitivity of a DCT is determined by the sampling circuit of the RCD, and Fig. 2 is a schematic diagram of the sampling circuit of the RCD in the prior art, in which the input end and output end of the secondary coil wound on the DCT iron core are connected respectively to the two ends of the load resistance $Z_1$, with the load resistance $Z_1$ being a variable resistor. In a practical application, after the sampling circuit has obtained a residual current, it also needs to be converted and transmitted by intermediate mechanisms (such as to be amplified by a amplifier circuit), and then sent into a processing unit to make a judgment, and when the residual current reaches a threshold value, an executing mechanism will be operated. Based on the sampling circuit shown in Fig. 2, DCT sensitivity expression can be obtained as shown in equation (2):

$$n_1 = \frac{V_{\Delta n}}{I_{\Delta n}} = \frac{Z_1}{N_2}\left\{1 - \frac{(Z_1 + Z^{'})L\sin(\psi + \alpha)}{4.44 f N_2^2 \mu kS}\right\}$$

(2)

In the above equation, $n_1$ is the DCT sensitivity of the sampling circuit based on that shown in Fig. 2, $I_{\Delta n}$ is the

rated residual operated current value, $V_{\Delta n}$ is the output voltage corresponding to $I_{\Delta n}$, $Z_1$ is the load resistance, $Z'$ is the resistance of the secondary coil, $f$ is the signal frequency, $N_2$ is the number of turns of the secondary coil, $k$ is the lamination coefficient of the iron core, $S$ is the cross-sectional area of the iron core, $L$ is the length of the magnetic path, $\psi$ is the loss angle of the iron core, $\alpha$ is the power factor angle of the secondary coil side, and $\mu$ is magnetic conductivity of the iron core.

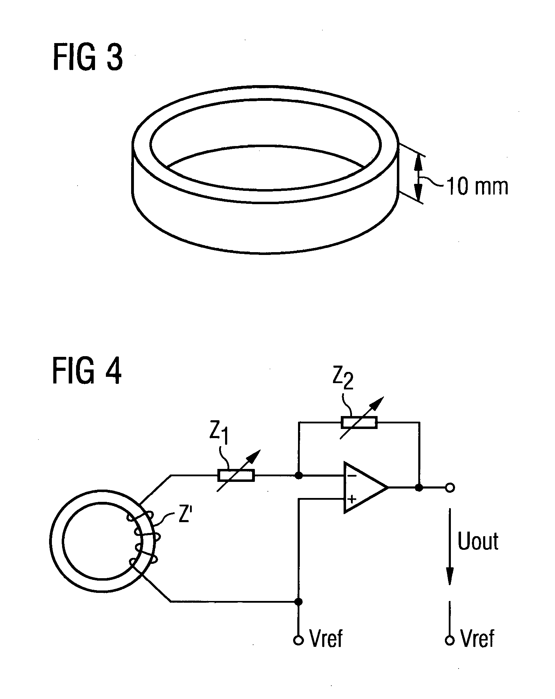

In a specific application, the value of the rated residual operated current $I_{\Delta n}$ can be set according to the actual needs, under the normal circumstances, the lowest value of the residual operated current $I_{\Delta n}$ is 30 mA, which is also the operating value required for the electric shock protection of a human body, in order to ensure enough linearity and sensitivity of DCT in such low current value, a DCT needs to have certain volume, that is shown in Fig. 3, and Fig. 3 is a schematic diagram of the iron core in the DCT of a type A RCD in the prior art, in which it can be seen that the height of the iron core of the DCT should be at least 10 mm, so as to have the specific iron core cross-sectional area $S$. In addition, the minimum height of DCT iron core in a type AC RCD can only reach 2 mm. That leads to a correspondingly very large volume for the RCD, however, small and compact RCDs are becoming a market demand nowadays, but the current large DCTs have restricted the development of small RCDs.

EP 0 936 716 A1 which is regarded as closest prior art, describes a differential protection device comprising a torus for measuring the differential currents in the main conductors. It includes a first secondary winding connected to a processing circuit, and a second secondary winding connected to a signaling circuit. There is also a supplementary winding in which a test current can flow. The processing circuit includes a threshold control device which modifies the load of the first secondary winding in order to change the calibrated operating value.

The object of the present invention is to increase the sensitivity of an electric current leakage protection device with a reduced volume. The present invention on the one hand provides a differential current transformer (DCT) according to claim 1, and on the other hand, provides a residual current operated protective device (RCD) according to claim 4, so as to reduce the volume of the residual current operated protective device RCD.

The differential current transformer (DCT) provided by the present invention comprises: an iron core and a secondary coil wound on said iron core, characterized in that said DCT is connected to a sampling circuit, said sampling circuit is a sampling circuit dual-regulated by both load resistance and amplifier feedback loop resistance.

Furthermore, said sampling circuit comprises: the load resistance $Z_1$ connected to one end of said secondary coil, an amplifier connected to said load resistance $Z_1$ in series and the feedback resistance $Z_2$ in said amplifier feedback loop;

wherein, the other end of the secondary coil and the non-inverting input of the amplifier are connected to a reference voltage; and the load resistance $Z_1$ and the feedback resistance $Z_2$ are adjustable resistors.

Moreover, said sampling circuit further comprises: a first adjustable resistor $Z$ connected respectively to both ends of the secondary coil, and a switch $K$ between the first adjustable resistor $Z$ and the secondary coil;

wherein, a rated residual operating current cut-off value $I_\Delta$ is obtained according to the value $I_{out\_m}$ of the amplifier output driving capability in the following equation, wherein when the set rated residual operating current value is smaller than or equal to the rated residual operating current cut-off value $I_\Delta$, said switch $K$ is turned off, and when the set rated residual operating current value is larger than the rated residual operating current cut-off value $I_\Delta$, said switch K is turned on;

$$I_\Delta = \frac{N_2}{k_1 k_2} \cdot I_{out\_m}$$

wherein, $N_2$ is the number of turns of the secondary coil, $k_1$ is virtual value coefficient, and $k_2$ is the largest measured value coefficient of the DCT.

Preferably, the height of said iron core is less than 10 mm.

Preferably, the height of said iron core is 2 mm.

The residual current operated protective device (RCD) provided by the present invention comprises: the differential current transformer (DCT) and a sampling circuit, said differential current transformer (DCT) comprises an iron core and a secondary coil wound on said iron core, characterized in that said sampling circuit is a sampling circuit dual-regulated by both load resistance and amplifier feedback loop resistance.

Furthermore, said sampling circuit comprises: the load resistance $Z_1$ connected to one end of said secondary coil, the amplifier connected to the load resistance $Z_1$ in series and the feedback resistance $Z_2$ in said amplifier feedback loop;

wherein, the other end of the secondary coil and the amplifier non-inverting input are connected to a reference voltage; and the load resistance $Z_1$ and the feedback resistance $Z_2$ are adjustable resistors.

Moreover, said sampling circuit further comprises: a first adjustable resistor $Z$ connected respectively to both ends of the secondary coil, and a switch $K$ between the first adjustable resistance $Z$ and the secondary coil;

wherein, a rated residual operating current cut-off value $I_\Delta$ is obtained according to the value $I_{out\_m}$ of the amplifier output driving capability in the following equation, wherein when the set rated residual operating current value is smaller than or equal to the rated residual operating current cut-off value $I_\Delta$, said switch K is turned off, and when the set rated residual operating current value is larger than the rated residual operating current cut-off value $I_\Delta$, said switch K is turned on;

$$I_\Delta = \frac{N_2}{k_1 k_2} \cdot I_{out\_m}$$

wherein, $N_2$ is the number of turns of the secondary coil, $k_1$ is virtual value coefficient, and $k_2$ is the largest measured value coefficient of the DCT.

Preferably, the height of said iron core is less than 10 mm.

Preferably, the height of said iron core is 2 mm.

It can be seen from the abovementioned solutions that, in the present invention, by providing a sampling circuit dual-regulated by both the load resistance and the amplifier feedback loop resistance, the differential current transformer DCT can have a smaller core size, thus reducing the volume of residual current operated protective device RCD on the basis of the reduced size of differential current transformer DCT.

Description of the accompanying drawings

The abovementioned and other features and advantages of the present invention will become more apparent to those skilled in the art by the detailed description of the exemplary embodiments of the present invention hereinbelow with reference to the accompany drawings, in which:

Fig. 1 is a schematic diagram of the B-H curve of a magnetic material;
Fig. 2 is a schematic diagram of a sampling circuit in the prior art;
Fig. 3 is a schematic diagram of a DCT iron core in the prior art;
Fig. 4 is a schematic diagram of the sampling circuit in a first embodiment of the present invention;
Fig. 5 is a schematic diagram of a DCT iron core with a height of 2 mm in the embodiment of the present invention; and
Fig. 6 is a schematic diagram of the sampling circuit in a secondary embodiment of the present invention.

Particular embodiments

In order to make the objects, technical solutions and advantages of the present invention more apparent, the present invention will be further described in detail below with reference to the accompanying drawings and embodiments.

In the embodiment of the present invention, the volume of a residual current operated protective device (RCD) can be reduced by providing a differential current transformer (DCT) of a small size, for example, the DCT iron core can be designed with a size (such as height) smaller than the size (such as height) of the DCT iron core in the prior art. For the sake of convenience in the description, the height of the iron core in the prior art is referred to as the first height in the present application, then the height of the iron core of the small size DCT in the present application can be smaller than the first height. However, in a particular implementation, if only the height of the DCT iron core is directly reduced in the prior art RCD , the cross-sectional area S of the DCT iron core will be reduced accordingly, then the value of B in equation (1) will be changed, leading to the change of the working position of B-H curve of the DCT iron core shown in Fig. 1, that is to say, a rational position will become an irrational position, as the corresponding position $B_2$ shown in Fig. 1, and $S_2$ in equation $B_2$ is the cross-sectional area of the DCT iron core after the height of the DCT is reduced. In this way, the linearity of the DCT will deteriorate. Although according to the expression (1), theoretically by reducing the value of the load resistance $Z_1$, the working position of the DCT will return to the rational position which corresponds to $B_1$ from the irrational position corresponding to $B_2$, but in this case DCT sensitivity shown in Fig. 2, which was based on the sampling circuit in the prior art, will be reduced with the reduction of the load resistance $Z_1$. It can be seen that the structure of the RCD on the basis of the prior art cannot achieve its object of reducing the volume of RCD by directly reducing the height of the DCT iron core, because the linearity and sensitivity performance of DCT cannot both be ensured at the same time.

For this reason, in the embodiment of the present invention a new RCD sampling circuit is provided, which is a dual-regulator circuit.

Fig. 4 is a schematic diagram of a sampling circuit in embodiment one of the present invention. As shown in Fig. 4, the sampling circuit comprises: a load resistance (Z1) connected to one end of the secondary coil in the DCT, an amplifier connected to the load resistance $Z_1$ in series and a feedback resistor $Z_2$ in said amplifier feedback loop (with the two ends of the feedback resistor $Z_2$ connected respectively to the output and the inverting input of the amplifier). In this case, the other end of the secondary coil and the non-inverting input of the amplifier are connected to a reference voltage; and the load resistance $Z_1$ and the feedback resistance $Z_2$ are both adjustable resistors.

Based on the sampling circuit of Fig. 4, the sensitivity of DCT shown in equation (3) can be obtained as follows:

$$n_2 = \frac{V_{\Delta n}^{'}}{I_{\Delta n}} = \frac{Z_2}{N_2}\left\{1 - \frac{(Z_1 + Z^{'})L\sin(\psi+\alpha)}{4.44 f N_2^2 \mu k S}\right\} \quad\quad (3)$$

In the above equation, $n_2$ is the DCT sensitivity on the basis of the sampling circuit shown in Fig. 4, $I_{\Delta n}$ is the rated residual operating current value, $V_{\Delta n}$ is the output voltage corresponding to $I_{\Delta n}$, $Z_2$ is the resistance in the amplifier feedback loop, $Z_1$ is the load resistance, $Z'$ is the resistance of the secondary coil, $f$ is the signal frequency, $N_2$ is the number of turns of the secondary coil, $k$ is the lamination factor of the iron core, $S$ is the cross-sectional area of the iron core, $L$ is the length of magnetic path, $\psi$ is the loss angle of iron core, $\alpha$ is the power factor angle of the secondary coil side, and $\mu$ is the magnetic conductivity of the iron core.

In embodiment one, flux density B is still calculated according to equation (1), after the height of the DCT iron core has been reduced, the cross-sectional area $S$ of the DCT iron core is reduced accordingly, then by adjusting the value of the load resistance $Z_1$, the value of flux density B is still maintained at $B_1$, accordingly, the working position of the DCT iron core is maintained at the corresponding rational position of $B_1$, leading to the good linearity of DCT. At the same time, as to the DCT sensitivity shown in equation (3), the sensitivity of the DCT can be corrected by adjusting the feedback resistance $Z_2$ of the amplifier feedback loop, so as to make the DCT maintain a quite good sensitivity thereof.

In practical applications, since the amplifier's maximum output driving capacity is normally fixed, for example, at 50 mA, accordingly the maximum rated residual operating current which can be measured by the sampling circuit shown in Fig. 4 is also fixed, as shown by equation (4):

$$I_{\Delta} = \frac{N_2}{k_1 k_2} \cdot I_{out\_m} \quad\quad (4)$$

in which, $N_2$ is the number of turns of the secondary coil, $k_1$ is virtual value coefficient, $k_2$ is the maximum measurable value coefficient, $I_{\Delta}$ is the cut-off value of the rated residual operating current, and $I_{out\_m}$ is the amplifier's output driving capacity.

For example, as to a type A RCD, the amplifier output corresponding to 135° pulsed DC signal peak is the largest, the virtual value coefficient $k_1$ is 4.69; in addition, $k_2$ usually can take 10, and then DCT measurement range is 0-10 $I_{\Delta n}$. Then, on the basis of the expression shown in equation (4), when the amplifier's largest output drive capacity $I_{out\_m}$ is 50 mA, and $N_2$ is 1260 turns, accordingly, the rated residual operating current cut-off value $I_{\Delta}$ is 1.34 A, if taking the integer 1A as the boundary of protection for the rated residual current, for a rated residual operating current above 1A, the sampling circuit shown in Fig. 4 will no longer apply.

However, in consideration of the rather high rated residual operating current value, accordingly, the value of the secondary coil resistor $Z'$ will be far greater than that of the load resistance $Z_1$, for example, when the value of the secondary coil resistor $Z'$ of DCT is 60Ω, the value of the corresponding load resistance which corresponds to the rated residual operating current value set at 5A is only 7.6Ω, so it can be seen that the latter is only 12.6% of the former. With the reduction in the height of the DCT iron core, the secondary coil will be reduced accordingly, which in turn leads to the reduction of the value of the secondary coil resistance $Z'$. Therefore, when the rated residual operating current value is set high, the working position of the DCT iron core in the prior art sampling circuit, with the reduction of the secondary coil resistor $Z'$, can be maintained at the rational working position.

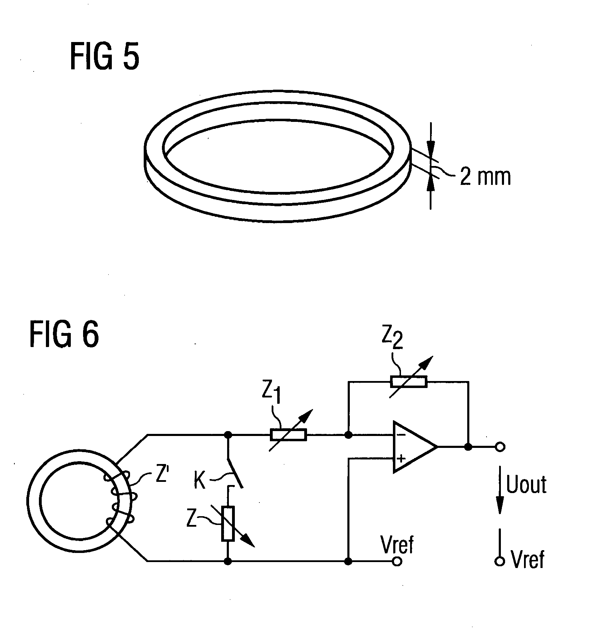

Hereinbelow, a type A RCD is taken as an example, the following table 1 shows the linearity comparison between the large size DCT and the small size DCT based on rated residual operating current of 5A, in which, the small size DCT takes the 2 mm height iron core case as an example, the large size DCT takes the 10 mm height iron core case as an example. Fig. 5 shows a schematic diagram of DCT iron core with 2 mm height in the embodiment of the present invention.

Table 1

| samples | secondary coil resistance $Z'$ ($\Omega$) | load resistance $Z_1$ ($\Omega$) | total secondary side resistance $Z'+Z_1$ ($\Omega$) | number of turns of the secondary coil $N_2$ | cross- sectional area of iron core (mm$^2$) | B (T) $I_{\Delta n} = $ 5A |
|---|---|---|---|---|---|---|
| large size DCT | 60 | 7.6 | 60+7.6=67.6 | 1022 | 25 | **0.065** |
| small size DCT | 34 | 8.9 | 34+8.9=42.9 | 1260 | 8.5 | **0.079** |

It can be seen that the difference of B is very small, that is, when the rated residual operating current is set high, on the basis of the prior art sampling circuit, DCT linearity affected by the reduction of the height of the DCT is quite small. For this reason, the dual-regulated sampling circuit shown in Fig. 4 can be connected in parallel with the sampling circuit in the prior art as shown in Fig. 2 in the embodiment of the present invention, and be selected by switching, so that when the value of the rated residual operating current is quite low, the dual-regulated sampling circuit shown in Fig. 4 is used, and when the value of the rated residual operating current is rather high, the prior art sampling circuit shown in Fig. 2 is used.

As shown in Fig. 6, Fig. 6 is a schematic diagram of the sampling circuit in embodiment two of the present invention. The sampling circuit on the basis of the sampling circuit shown in Fig. 4 further comprises: a first adjustable resistor $Z$ connected respectively to both ends of the secondary coil, and there is a switch $K$ between the first adjustable resistance $Z$ and the secondary coil.

According to the value $I_{out\_m}$ of the amplifier output drive capacity of the expression shown in equation (4), the rated residual operating current cut-off value $I_\Delta$ can be obtained, so that when the set rated residual operating current value is smaller than or equal to the rated residual operating current cut-off value $I_\Delta$, the switch K is turned off, and when the set rated residual operating current value is larger than the rated residual operating current cut-off value $I_{\Delta n}$, the switch K is turned on. In this case, when K is turned off, Fig. 6 is the sampling circuit shown in Fig. 4, and $Z_1$ is the load resistance; and when $K$ is turned on, $Z$ is the load resistance, which is equivalent to $Z_1$ as shown in Fig. 2, and by then $Z_1$ in Fig. 6 is a part of the voltage amplifier circuit.

For example, in the case that in the above-mentioned example it takes 1A as the boundary for residual current protection, it can be as follows: when $I_{\Delta n}$ is set to 30 mA to 1 A, the switch K is turned off; and when $I_{\Delta n}$ is set as 1 A to 5 A, the switch K is turned on.

What are mentioned above are merely the preferable exemplary embodiments of the present invention, and they are not intended to limit the protection scope of the present claims. Any modification, equivalent substitution and improvement within the principle of the present invention are to be covered in the scope of protection of the present claims.

**Claims**

1. A differential current transformer DCT specified for a set rated residual operating current value, comprising an iron core and a secondary coil wound on said iron core;
   wherein, said differential current transformer DCT is connected with a sampling circuit, and said sampling circuit is a sampling circuit dual-regulated by both load resistance and amplifier feedback loop resistance;
   wherein, said sampling circuit comprises the load resistance $Z_1$ connected to one end of said secondary coil, a differential amplifier connected to said load resistance $Z_1$ in series and the feedback resistor $Z_2$ positioned in said amplifier feedback loop; and
   wherein, the other end of the secondary coil and the non-inverting input of the amplifier are connected to a reference voltage;
   **characterized in that**
   the load resistance $Z_1$ and the feedback resistance $Z_2$ are adjustable resistors;
   said sampling circuit further comprises a first adjustable resistor $Z$ connected respectively to both ends of the secondary coil, and a switch ($K$) between the first adjustable resistor $Z$ and the secondary coil;
   wherein, a rated residual operating current cut-off value $I_\Delta$ is obtained according to the value $I_{out\_m}$ of the amplifier output driving capability in the following equation, wherein when the set rated residual operating current value is smaller than or equal to the rated residual operating current cut-off value $I_\Delta$, said switch ($K$) is turned off, and when the set rated residual operating current value is larger than the rated residual operating current cut-off value $I_\Delta$, said

switch (*K*) is turned on;

$$I_\Delta = \frac{N_2}{k_1 k_2} \cdot I_{out\_m}$$  wherein, $N_2$ is the number of turns of the secondary coil, $k_1$ is a virtual value coefficient for maximising the amplifier output, and $k_2$ is the largest value coefficient of a measurement range of the DCT.

2. The differential current transformer DCT as claimed in claim 1, **characterized in that** the height of said iron core is smaller than 10 mm.

3. The differential current transformer DCT as claimed in claim 2, **characterized in that** the height of said iron core is 2 mm.

4. A residual current operated protective device RCD, comprising a differential current transformer DCT specified for a set rated residual oper and a sampling circuit, with said differential current transformer DCT comprising an iron core and a secondary coil wound on said iron core;
   wherein, said sampling circuit is a sampling circuit dual-regulated by both load resistance and amplifier feedback loop resistance;
   wherein, said sampling circuit comprises: the load resistance $Z_1$ connected to one end of said secondary coil, and a differential amplifier connected to said load resistance $Z_1$ in series and the feedback resistor $Z_2$ in said amplifier feedback loop; and
   wherein, the other end of the secondary coil and the non-inverting input of the amplifier are connected to a reference voltage;
   **characterized in that**
   the load resistance $Z_1$ and the feedback resistance $Z_2$ are adjustable resistors;
   said sampling circuit further comprises: a first adjustable resistor $Z$ connected respectively to both ends of the secondary coil, and a switch (*K*) between the first adjustable resistor $Z$ and the secondary coil;
   wherein, a rated residual operating current cut-off value $I_\Delta$ is obtained according to the value $I_{out\_m}$ of the amplifier output driving capability in the following equation, wherein when the set rated residual operating current value is smaller than or equal to the rated residual operating current cut-off value $I_\Delta$, said switch (*K*) is turned off, and when the set rated residual operating current value is larger than the rated residual operating current cut-off value $I_\Delta$, said switch (*K*) is turned on;

$$I_\Delta = \frac{N_2}{k_1 k_2} \cdot I_{out\_m}$$  wherein, $N_2$ is the number of turns of the secondary coil, $k_1$ is a virtual value coefficient for maximising the amplifier output, and $k_2$ is the largest value coefficient of a measurement range of the DCT.

5. The residual current operated protective device RCD as claimed in claim 4, **characterized in that** the height of said iron core is less than 10 mm.

6. The residual current operated protective device RCD as claimed in claim 5, **characterized in that** the height of said iron core is 2 mm.

**Patentansprüche**

1. Differenzstromwandler DCT, der für einen eingestellten Bemessungs-Restbetriebsstromwert spezifiziert ist und der einen Eisenkern und eine Sekundärspule, die auf diesen Eisenkern gewickelt ist, umfasst;
   wobei der Differenzstromwandler DCT mit einer Abtastschaltung verbunden ist und diese Abtastschaltung eine Abtastschaltung ist, die durch sowohl einen Lastwiderstand als auch den Widerstand einer Rückführungsschleife eines Verstärkers zweifach geregelt ist;
   wobei diese Abtastschaltung den Lastwiderstand $Z_1$, der mit einem Ende der Sekundärspule verbunden ist, einen Differentialverstärker, der mit diesem Lastwiderstand $Z_1$ in Reihe geschaltet ist, und den Rückführwiderstand $Z_2$, der in der Rückführungsschleife des Verstärkers positioniert ist, umfasst; und
   wobei das andere Ende der Sekundärspule und der nichtinvertierende Eingang des Verstärkers mit einer Referenzspannung verbunden sind;

**dadurch gekennzeichnet, dass**

der Lastwiderstand $Z_1$ und der Rückführwiderstand $Z_2$ einstellbare Widerstände sind;

die Abtastschaltung ferner einen ersten einstellbaren Widerstand Z, der mit beiden Enden der Sekundärspule verbunden ist, und einen Schalter (K) zwischen dem ersten einstellbaren Widerstand Z und der Sekundärspule umfasst; wobei ein Bemessungs-Restbetriebsstrom-Abschaltwert $I_\Delta$ entsprechend dem Wert $I_{out\_m}$ der Treiberfähigkeit des Verstärkerausgangs in der folgenden Gleichung erhalten wird, wobei, wenn der eingestellte Bemessungs-Restbetriebsstromwert kleiner als der oder gleich dem Bemessungs-Restbetriebsstrom-Abschaltwert $I_\Delta$ ist, der Schalter (K) ausgeschaltet wird, und wenn der eingestellte Bemessungs-Restbetriebsstromwert größer als der Bemessungs-Restbetriebsstrom-Abschaltwert $I_\Delta$ ist, der Schalter (K) eingeschaltet wird;

$$I_\Delta = \frac{N_2}{k_1 k_2} \cdot I_{out\_m} \text{,}$$ wobei $N_2$ die Anzahl der Windungen der Sekundärspule ist, $k_1$ ein Koeffizient mit einem virtuellen Wert zum Maximieren des Verstärkerausgangs ist und $k_2$ der Koeffizient mit dem größten Wert eines Messbereichs des DCT ist.

**2.** Differenzstromwandler DCT nach Anspruch 1, **dadurch gekennzeichnet, dass** die Höhe des Eisenkerns kleiner als 10 mm ist.

**3.** Differenzstromwandler DCT nach Anspruch 2, **dadurch gekennzeichnet, dass** die Höhe des Eisenkerns 2 mm beträgt.

**4.** Reststrombetätigte Schutzeinrichtung RCD, welche einen Differenzstromwandler DCT, der für einen eingestellten Bemessungs-Restbetriebsstromwert spezifiziert ist, und eine Abtastschaltung umfasst, wobei der Differenzstromwandler DCT einen Eisenkern und eine Sekundärspule, die auf diesen Eisenkern gewickelt ist, umfasst; wobei die Abtastschaltung eine Abtastschaltung ist, die durch sowohl einen Lastwiderstand als auch den Widerstand einer Rückführungsschleife eines Verstärkers zweifach geregelt ist; wobei diese Abtastschaltung umfasst: den Lastwiderstand $Z_1$, der mit einem Ende der Sekundärspule verbunden ist, und einen Differentialverstärker, der mit diesem Lastwiderstand $Z_1$ in Reihe geschaltet ist, und den Rückführwiderstand $Z_2$ in der Rückführungsschleife des Verstärkers; und

wobei das andere Ende der Sekundärspule und der nichtinvertierende Eingang des Verstärkers mit einer Referenzspannung verbunden sind;

**dadurch gekennzeichnet, dass**

der Lastwiderstand $Z_1$ und der Rückführwiderstand $Z_2$ einstellbare Widerstände sind;

die Abtastschaltung ferner umfasst: einen ersten einstellbaren Widerstand Z, der mit beiden Enden der Sekundärspule verbunden ist, und einen Schalter (K) zwischen dem ersten einstellbaren Widerstand Z und der Sekundärspule; wobei ein Bemessungs-Restbetriebsstrom-Abschaltwert $I_\Delta$ entsprechend dem Wert $I_{out\_m}$ der Treiberfähigkeit des Verstärkerausgangs in der folgenden Gleichung erhalten wird, wobei, wenn der eingestellte Bemessungs-Restbetriebsstromwert kleiner als der oder gleich dem Bemessungs-Restbetriebsstrom-Abschaltwert $I_\Delta$ ist, der Schalter (K) ausgeschaltet wird, und wenn der eingestellte Bemessungs-Restbetriebsstromwert größer als der Bemessungs-Restbetriebsstrom-Abschaltwert $I_\Delta$ ist, der Schalter (K) eingeschaltet wird;

$$I_\Delta = \frac{N_2}{k_1 k_2} \cdot I_{out\_m} \text{,}$$ wobei $N_2$ die Anzahl der Windungen der Sekundärspule ist, $k_1$ ein Koeffizient mit einem virtuellen Wert zum Maximieren des Verstärkerausgangs ist und $k_2$ der Koeffizient mit dem größten Wert eines Messbereichs des DCT ist.

**5.** Reststrombetätigte Schutzeinrichtung RCD nach Anspruch 4, **dadurch gekennzeichnet, dass** die Höhe des Eisenkerns kleiner als 10 mm ist.

**6.** Reststrombetätigte Schutzeinrichtung RCD nach Anspruch 5, **dadurch gekennzeichnet, dass** die Höhe des Eisenkerns 2 mm beträgt.

**Revendications**

1. Transformateur à courant différentiel DCT spécifié pour une valeur de courant de fonctionnement résiduel nominal de consigne comprenant un noyau en fer et une bobine secondaire enroulée sur ledit noyau en fer ;

dans lequel, ledit transformateur à courant différentiel DCT est connecté à un circuit d'échantillonnage, et ledit circuit d'échantillonnage est un circuit d'échantillonnage régulé à la fois par la résistance de charge et par la résistance à boucle de rétroaction d'amplificateur ;

dans lequel ledit circuit d'échantillonnage comprend la résistance de charge $Z_1$ connectée à une première extrémité de ladite bobine secondaire, un amplificateur différentiel connecté à ladite résistance de charge $Z_1$ en série et à la résistance de rétroaction $Z_2$ positionnée dans ladite boucle de rétroaction d'amplificateur ; et

dans lequel, l'autre extrémité de la bobine secondaire et l'entrée de non-inversion de l'amplificateur sont connectées à une tension de référence ;

**caractérisé en ce que**

la résistance de charge $Z_1$ et la résistance de rétroaction $Z_2$ sont des résistances réglables ;

ledit circuit d'échantillonnage comprend en outre une première résistance réglable Z connectée respectivement aux deux extrémités de la bobine secondaire, et un commutateur (K) entre la première résistance réglable (Z) et la bobine secondaire ;

dans lequel, une valeur d'interruption de courant de fonctionnement résiduel nominal $I_\Delta$ est obtenue en fonction de la valeur $I_{out\_m}$ de la capacité d'entraînement de sortie de l'amplificateur dans l'équation suivante, dans lequel, lorsque la valeur de courant de fonctionnement résiduel nominal de consigne est inférieure ou égale à la valeur d'interruption de courant de fonctionnement résiduel nominal $I_\Delta$, ledit commutateur (K) est désactivé, et lorsque la valeur de courant de fonctionnement résiduel nominal de consigne est supérieure à la valeur d'interruption de courant de fonctionnement résiduel nominal $I_\Delta$, ledit commutateur (K) est activé ;

$$I_\Delta = \frac{N_2}{k_1 k_2} \cdot I_{out\_m} \, ,$$ dans laquelle, $N_2$ est le nombre de spires de la bobine secondaire, $k_1$ est un coefficient

de valeur virtuel pour maximiser la sortie de l'amplificateur et $k_2$ est le coefficient de valeur le plus élevé d'une plage de mesure du DCT.

2. Transformateur à courant différentiel DCT selon la revendication 1, **caractérisé en ce que** la hauteur dudit noyau en fer est inférieure à 10 mm.

3. Transformateur à courant différentiel DCT selon la revendication 2, **caractérisé en ce que** la hauteur dudit noyau en fer est de 2 mm.

4. Dispositif de protection à courant de fonctionnement résiduel RCD, comprenant un transformateur à courant différentiel DCT spécifié pour une valeur de courant de fonctionnement résiduel nominal de consigne et un circuit d'échantillonnage, ledit transformateur à courant différentiel DCT comprenant un noyau en fer et une bobine secondaire enroulée sur ledit noyau en fer ;

dans lequel ledit circuit d'échantillonnage est un circuit d'échantillonnage régulé à la fois par la résistance de charge et par la résistance à boucle de rétroaction d'amplificateur ;

dans lequel, ledit circuit d'échantillonnage comprend : la résistance de charge $Z_1$ connectée à une première extrémité de ladite bobine secondaire, et un amplificateur différentiel connecté à ladite résistance de charge $Z_1$ en série et à la résistance de rétroaction $Z_2$ positionnée dans ladite boucle de rétroaction d'amplificateur ; et

dans lequel, l'autre extrémité de la bobine secondaire et l'entrée de non-inversion de l'amplificateur sont connectées à une tension de référence ;

**caractérisé en ce que**

la résistance de charge $Z_1$ et la résistance de rétroaction $Z_2$ sont des résistances réglables ;

ledit circuit d'échantillonnage comprend en outre : une première résistance réglable Z connectée respectivement aux deux extrémités de la bobine secondaire, et un commutateur (K) entre la première résistance réglable (Z) et la bobine secondaire ;

dans lequel, une valeur d'interruption de courant de fonctionnement résiduel nominal $I_\Delta$ est obtenue en fonction de la valeur $I_{out\_m}$ de la capacité d'entraînement de sortie de l'amplificateur dans l'équation suivante, dans lequel, lorsque la valeur de courant de fonctionnement résiduel nominal de consigne est inférieure ou égale à la valeur d'interruption de courant de fonctionnement résiduel nominal $I_\Delta$, ledit commutateur (K) est désactivé, et lorsque la valeur de courant de fonctionnement résiduel nominal de consigne est supérieure à la valeur d'interruption de courant de fonctionnement résiduel nominal $I_\Delta$, ledit commutateur (K) est activé ;

$$I_\Delta = \frac{N_2}{k_1 k_2} \cdot I_{out\_m}$$
, dans laquelle, $N_2$ est le nombre de spires de la bobine secondaire, $k_1$ est un coefficient de valeur virtuel pour maximiser la sortie de l'amplificateur et $k_2$ est le coefficient de valeur le plus élevé d'une plage de mesure du DCT.

5. Dispositif de protection à courant résiduel RCD selon la revendication 4, **caractérisé en ce que** la hauteur dudit noyau en fer est inférieure à 10 mm.

6. Dispositif de protection à courant résiduel RCD selon la revendication 5, **caractérisé en ce que** la hauteur dudit noyau en fer est de 2 mm.

# FIG 1

$$B_2 = \frac{(Z_1 + Z')I_1}{4.44\,f\,N_2^2\,kS_2}\quad S_2 < S_1$$

$$B_1 = \frac{(Z_1 + Z')I_1}{4.44\,f\,N_2^2\,kS_1}$$

$$B_1 = \frac{(Z'_1 + Z')I_1}{4.44\,f\,N_2^2\,kS_2}\quad Z'_1 < Z_1$$

B-H

B

0

0

H

B-H curve

# FIG 2

Z'

$Z_1$

Uout

FIG 3

10 mm

FIG 4

$Z_2$

$Z_1$

$Z'$

−

+

Uout

Vref

Vref

# FIG 5

2 mm

# FIG 6

$Z_2$

$Z_1$

$Z'$

K

Z

Vref

Uout

Vref

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 0936716 A1